(19) **Europäisches Patentamt / European Patent Office / Office européen des brevets**

(11) **EP 4 787 083 A1**

(12) **EUROPEAN PATENT APPLICATION**

(43) Date of publication:
 **05.08.2026 Bulletin 2026/32**

(21) Application number: **25154733.7**

(22) Date of filing: **29.01.2025**

(51) International Patent Classification (IPC):
 *G04F 5/14* $^{(2006.01)}$    *B82Y 10/00* $^{(2011.01)}$
 *B82Y 20/00* $^{(2011.01)}$    *G02B 6/122* $^{(2006.01)}$
 *G06N 10/40* $^{(2022.01)}$    *G21K 1/00* $^{(2026.01)}$
 *H04B 10/70* $^{(2013.01)}$

(52) Cooperative Patent Classification (CPC):
 **G04F 5/14; G06N 10/40; G21K 1/20; B82Y 10/00**

(84) Designated Contracting States:
 **AL AT BE BG CH CY CZ DE DK EE ES FI FR GB GR HR HU IE IS IT LI LT LU LV MC ME MK MT NL NO PL PT RO RS SE SI SK SM TR**
 Designated Extension States:
 **BA**
 Designated Validation States:
 **GE KH MA MD TN**

(71) Applicant: **Alpine Quantum Technologies GmbH 6020 Innsbruck (AT)**

(72) Inventors:
 • **Holz, Philip**
  **6020 Innsbruck (AT)**
 • **Erhard, Alexander**
  **6020 Innsbruck (AT)**

(74) Representative: **Grünecker Patent- und Rechtsanwälte PartG mbB Leopoldstraße 4 80802 München (DE)**

(54) **MICROFABRICATED LIGHT DELIVERY SYSTEM FOR DISTRIBUTION OF COLLIMATED LASER BEAMS IN TRAPPED-ION DEVICES AND METHOD OF MANUFACTURING THE SAME USING MICROFABRICATION**

(57) Provided is a microfabricated ion trap system with an integrated light delivery system for addressing confined ions with a light beam, and a microfabrication method for manufacturing a microfabricated ion trap system with an integrated light delivery system. The system comprises an optical refocusing element (e.g. a micro-fabricated lens system) to refocus or collimate the laser beam coupled out of a PIC chip waveguide and one or more optical redirecting elements (e.g. a micro-fabricated mirrors) to redirect the laser beam, such that the light propagates in or through a plane or a plurality of planes aligned with the ion trapping locations in the ion trap.

**Fig. 2**

EP 4 787 083 A1

## Description

TECHNICAL FIELD

Embodiments of the present invention relate to the field of optical addressing for trapped ions stored in an ion trap.

BACKGROUND

Many technical applications in the field of quantum technologies (e.g. quantum computing, quantum simulations, atomic and molecular experiments, spectroscopy, atomic clocks, etc.) require the ability to precisely control the quantum states of quantum entities.

For example, the quantum entity whose states are being controlled may be an ion trapped in an ion trap. A setup of such an ion trap may comprise a plurality of electrodes within a vacuum apparatus.

For example, in the field of quantum computing, such trapped ions are used as qubit registers. To perform quantum operations by implementing quantum gates on said ion-qubit register, the electronic and/or motional states of one or more trapped ions are being manipulated and/or entangled using laser beams directed to the trapped ions.

SUMMARY

It may be desirable to have a system that allows for an efficient use of the laser light addressing ions trapped in an ion trap.

In some embodiments, this is facilitated by providing a light delivery system that is integrated with a trap chip comprising a set of microfabricated mirrors and a micro-fabricated lens system to refocus a light beam coupled out of a PIC chip waveguide and redirect the light beam, such that the light propagates in a plane aligned with the ion trapping locations in the ion trap.

The invention is defined by the scope of independent claims. Some of the advantageous embodiments are provided in the dependent claims.

According to an embodiment, provided is a microfabricated ion trap system with an integrated microfabricated light delivery system for addressing confined ions with a light beam, the ion trap system comprising: a trap module comprising electrodes configured to confine the ions at a plurality of trapping locations; an optics module comprising an optical waveguide configured to route the light beam; an optical outcoupling element configured to couple the light beam out of the waveguide into a direction pointing towards the trap module; an optical refocusing element configured to refocus the light beam; and one or more optical redirecting elements, each of the one or more optical redirecting elements being configured to redirect the refocused light beam to a direction passing through at least one of the plurality of trapping locations.

Further provided is a microfabrication method for manufacturing an ion trap with an integrated microfabricated light delivery system.

These and other features and characteristics of the presently disclosed subject matter, as well as the methods of operation and functions of the related elements of structures and the combination of parts and fabrication technologies, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter.

BRIEF DESCRIPTION OF DRAWINGS

An understanding of the nature and advantages of various embodiments may be realized by reference to the following figures.

**Fig. 1** is a schematic three-dimensional view of a surface trap according to an embodiment.

**Fig. 2** is a three-dimensional sectional view of a surface trap according to an embodiment with the section in the yz plane.

**Fig. 3** is a top view of a surface trap according to an embodiment having a laser beam aligned with the trap axis.

**Fig. 4** is top view of a surface trap according to an embodiment having a laser beam aligned at 45° to the trap axis and having in-plane reflection elements.

**Fig. 5** is a top view of a surface trap according to an embodiment having two laser beams aligned at 45° to trap axis and 90° to each other, overlapping at ion positions.

**Fig. 6** is a top view of a surface trap array according to an embodiment having two linear traps supplied with light by a single beam.

**Fig. 7** is a top view of a surface trap according to an embodiment using refocusing elements for compensation of optical power loss.

**Fig. 8** is a three-dimensional sectional view of a three-dimensional (3D) trap according to an embodiment with the section in the xy-plane.

**Fig. 9** is a three-dimensional sectional view of a 3D trap according to an embodiment with the section in the yz-plane.

**Fig. 10** is a schematic three-dimensional view of a 3D trap array with two laterally adjacent 3D traps according to an embodiment.

**Fig. 11** is a top view of a 3D trap array with two laterally adjacent 3D traps connected by junctions according to an embodiment.

**Fig. 12** is a three-dimensional sectional view of a stack of two vertically stacked 3D trap modules according to an embodiment with the section in the xy-plane.

**Fig. 13** is a three-dimensional sectional view of a stack of two vertically stacked 3D trap modules according to an embodiment with the section in the yz-plane.

**Fig. 14** is a cross-sectional view of an optical system according to an embodiment comprising elements for beam re-coupling into a second waveguide.

**Fig. 15** is a flow chart showing method steps for micro-fabricating an ion trap with an integrated microfabricated light delivery system according to the present disclosure.

**Fig. 16A** is a cross-sectional view of exemplary beam outcoupling and refocusing elements according to the present disclosure having a stack 3D printed micro lenses as a refocusing element.

**Fig. 16B** is a cross-sectional view of exemplary beam outcoupling and refocusing elements according to the present disclosure having a wafer stack with lithographically structured optical elements as a refocusing element.

**Fig. 17A** illustrates beam propagation and mirror realization through a vacuum.

**Fig. 17B** illustrates beam propagation and mirror realization within a substrate.

DETAILED DESCRIPTION

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

It is understood that the features of the various exemplary embodiments and/or aspects described herein may be combined with each other, unless specifically noted otherwise.

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to comprise one or more items and may be used interchangeably with "one or more" and "at least one." Furthermore, as used herein, the term "set" is intended to comprise one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

*Quantum computing*

In quantum computing, quantum bits or qubits represent the basic unit of quantum information, corresponding to the quantum version of the binary digit (bit) representing a "0" and a "1" in a classical computer. A qubit is represented by a two-state (or two-level) quantum-mechanical system. In principal, such a quantum mechanical system may have more than two states. However, a suitable system is required to have at least two reliably distinguishable quantum states.

There are various physical systems, which comprise at least two distinguishable quantum states, for example, electron or nuclear spin states, atomic or nuclear states, nuclear magnetic resonance states, electronic states in quantum dots or the like.

For example, in a system using trapped ions (i.e. atoms or molecules with a net electrical charge), qubit states may be controlled and read out using radiation provided from one or more laser (light amplification by stimulated emission of radiation) beams. Suitable elements comprise, for example, Beryllium Be, Magnesium Mg, Calcium Ca, Strontium Sr, Barium Ba, Radium Ra, and Ytterbium Yb.

The internal qubit levels of the ion may be chosen as a ground level and a long-lived excited level, a so-called metastable level, forming a so-called optical qubit. In optical qubits, quantum information is encoded in two electronic states connected by a transition with frequency in the optical domain, i.e. a frequency in the range from 380 THz to 800 THz.

Alternatively, the qubit levels of the ion may be two different magnetic sublevels within the ground state of the ion with transition frequencies in the microwave to radiowave domain, forming a so-called Zeeman qubit or hyperfine qubit. Changing the state of a Zeeman or hyperfine qubit may involve the application of stimulated Raman transitions between the levels. Raman transitions facilitate an adiabatic transfer from a first hyperfine state to the second hyperfine state via a virtual intermediate state. Said transitions may have optical wavelengths.

Moreover, the motion of the trapped and crystallized ions becomes quantized, as the ions form a sufficiently well isolated quantum system within the ion trap. For example, the ions form a linear chain in the trap, e.g. a Paul trap, a Penning trap or the like. Ion traps are explained in detail in the section *Ion traps.* The motional modes, e.g. vibrational modes, of the entire linear chain of ions may be described by a quantum mechanical harmonic oscillator.

Using interaction with laser beams, trapped ions may be cooled to near their motional ground state. Such cooling of the ions may involve Doppler cooling and/or resolved sideband cooling. Initialization of the internal qubits may be performed similarly by laser beam-induced transitions in individual ions. Qubits may be read out by applying a resonant laser beam to detect their fluorescence. A rapid cycling transition from one of the qubit levels to a higher excited level of the ion using such a resonant laser beam results in the emission of fluorescence photons, which may be detected, if the level is populated. If the level is not populated, no fluorescence photons will be detected.

The interaction with laser beams also facilitates transitions between the two qubit states (i.e. single-qubit operations). A pair of qubits may be entangled (i.e. two-qubit gate operations) by application of a qubit-state dependent force using laser pulses that couple the individual qubit state to the collective motional modes of the trapped ions. A similar operation may be also applied to more than two ions. These and further examples of one or more qubit operations are provided, e.g., in H. Häffner, C.F. Roos, R. Blatt, "Quantum computing with trapped ions", Physics Reports, Volume 469, Issue 4, 2008, Pages 155-203 (https://doi.org/10.1016/j.physrep.2008.09.003) or in G. Chen, et al. Quantum Computing Devices: Principles, Designs, and Analysis. USA, CRC Press, 2019.

*Ion traps*

In the following, the term *"ion trap"* refers to any device employable to trap ions, using electric and/or magnetic field. For instance, an ion trap may be a Penning trap; a Paul trap; a three dimensional, 3D, ion trap; and/or a linear 3D trap. In this disclosure, the term ion trap refers to an assembly with a plurality of electrodes which, when driven, generate an electric field that limits (traps) the freedom of movement of ions so that they may not escape a particular (preferably small) region in the vicinity of those electrodes. It is noted that the actual ion trap device/system may comprise further mechanical and electrical components such as fixing means, electrical contacts, housing, power source, control circuitry, means to cool ions or the like.

An ion trap is thus a device employable to "*trap*" ions, i.e. employable to spatially confine ions to a particular (small) region, here also referred to as **"trapping zone"**. In general, ion traps use electric and/or magnetic fields to trap ions.

The term "*Paul trap*" refers to a trap that uses electric fields to trap the ions. Usually, in a Paul trap, only electric fields are used to trap the ions. In particular, usually no magnetic fields are used. In general, at least one of the electric fields of a Paul trap is alternating (e.g., oscillating), and a Paul trap may use both static as well as alternating electric fields. For example, the alternating field of a Paul trap may be an alternating electric multipole field, in particular, an electric quadrupole field. Since the switching of the voltage is often at radio frequency, these traps are also called Radio Frequency (RF) traps. The present disclosure is, however, not limited to Paul traps and also covers other types of ion traps, for example Penning traps, where a combination of electric and magnetic fields is employed to trap the ions.

**Surface traps** (or "surface ion traps") are ion traps where all electrodes, generating said fields, are located (essentially) in or on a same plane. For surface traps, the trapping region is usually above the electrode plane at a distance, referred to as the ion-surface separation.

A **linear surface trap** is a particular type of a surface trap. Usually, in a linear surface trap, the ions are confined in two spatial directions (the so-called **radial directions)** using an alternating (AC) electric field and confined along the third spatial direction (the so-called **axial direction** or **trap axis)** by static (DC) electric potentials. Accordingly, a linear surface trap is in general also a (linear) Paul trap.

In the present disclosure, the term **"3D trap"** refers to any ion trap, which is not a surface ion trap. In a 3D trap, the electrodes are thus located on different planes. More specifically, some electrodes may be located in different planes, while some electrodes may still be in a same plane. In other words, the term 3D ion trap refers to a (three-dimensional) assembly with a plurality of electrodes which, when driven, generate electric and/or magnetic field(s) that limits the freedom of movement of ions so that they may not escape a particular (preferably small) region in the vicinity of those electrodes. For 3D traps, the trapping region is usually inside the ion trap, i.e. there are usually electrodes on different sides/directions of the trapping zone of a 3D trap. These directions may correspond to a symmetry of the 3D trap, often a continuous or discrete rotational symmetry. For instance, in case of a discrete rotational symmetry of order n, being an integer greater than 1, there may be n electrodes at n respective directions which are related by rotations around the trap axis by angles of $(360°/n) \cdot m$, where m = 0,1,2, ... , $n$ - 1.

A **linear 3D trap** is a particular type of a 3D trap. Usually, in a linear 3D trap, the ions are confined in two spatial directions (radial directions) using an alternating (AC) electric field and confined in the third direction (axial direction) by static (DC) electric potentials. Accordingly, a linear 3D trap is in general also a (linear) Paul trap. Henceforth, without loss of generality, the axial direction of a surface linear trap or a 3D linear trap is assumed to be parallel to the z-axis of a Cartesian coordinate system in which the axes are represented by three mutually orthogonal unit vectors $\hat{e}_x$, $\hat{e}_y$, and $\hat{e}_z$. For a surface trap, the axial direction often corresponds to a translational symmetry of the electrode geometry. A 3D trap often has (discrete) cylindrical symmetry around the trap axis. The

direction $\hat{r}(x, y) = (x\hat{e}_x + y\hat{e}_y)/\sqrt{x^2 + y^2}$ is referred to as the *"radial direction"* (at the point $(x, y, 0) = x\hat{e}_x + y\hat{e}_y$). It is further noted that the trap axis may also be the axis along which multiple trapped ions typically align, i.e. the axis of a chain of trapped crystallized ions is typically identical with the trap axis.

*Further issues*

Trapped ion based quantum devices, such as quantum computing devices, require light such as laser radiation to be delivered to ions trapped within an ion trap operated in vacuum conditions. The inventors have considered that it is desirable to have the light delivery system integrated with a trap chip, as this may facilitate delivery of the light to a possibly large number of trapping sites (also called "ion trapping location") without the geometric limitations of using laser beams coming from outside vacuum. Such geometric limitations may be associated with e.g. difficulties with the proper adjustment of the laser source outside the vacuum with respect to the ion trapping locations within the vacuum, or difficulties with the in-coupling of the laser beams into the vacuum. Furthermore, the inventors have considered that it is desirable to use a photonic integrated circuit (PIC) as part of the integrated light delivery system, e.g. for the purpose of laser light routing in waveguides, light distribution from one optical channel into multiple optical channels, active multiplexing, active amplitude and frequency control, etc.

As a further issue, when light is coupled out of the PIC, e.g. using an integrated mirror or a grating coupler, the laser light from the PIC typically illuminates only a single ion trapping location. In view of this, the inventors have considered that it is desirable to use the laser light more efficiently.

*Embodiments*

In view of the above issues, to provide for an efficient usage of the laser light that is coupled out of the PIC, it is an aim of the present disclosure to facilitate for the laser light to propagate parallel to the plane spanned by the ion trapping locations within the ion trap. Such an arrangement facilitates reusing the same laser light from the same light beam (e.g. a laser beam) for illuminating different ion trapping locations.

The present disclosure suggests using an optical system comprising an optical refocusing element (e.g. a micro-fabricated lens system) to refocus or collimate the laser beam coupled out of a PIC chip waveguide and one or more optical redirecting elements (e.g. a set of microfabricated mirrors) to redirect the laser beam, such that the light propagates in or through a plane or a plurality of planes aligned with the ion trapping locations in the ion trap.

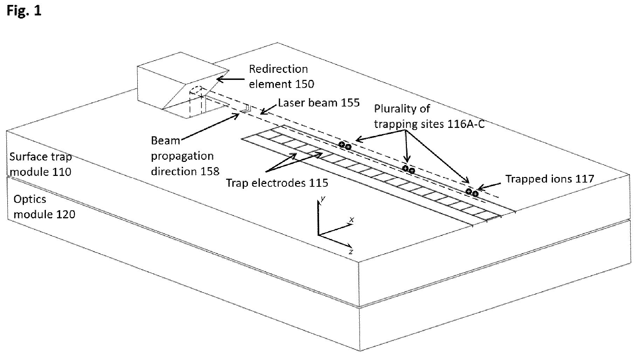

As can be seen from **Figures 1 to 3 and Figures 8 and 9,** provided is a microfabricated ion trap system with an integrated microfabricated light delivery system for addressing confined ions with a light beam. The ion trap system comprises a trap module 110, 810, an optics module 120, 820, an optical outcoupling element 130, 830, an optical refocusing element 140, 840 and one or more optical redirecting elements 150, 850.

The trap module 110, 810 comprises electrodes configured to confine the ions 117 at a plurality of trapping locations 116A-C, 816A-B. The optics module 120, 820 comprises an optical waveguide 125, 825 configured to route the light beam. The optical outcoupling element 130, 830 is configured to couple the light beam out of the waveguide into a direction pointing towards the trap module 110, 810. The optical refocusing element 140, 840 is configured to refocus the light beam coupled out of the waveguide 125, 825. Each of the one or more optical redirecting elements 150, 850 is configured to redirect the refocused light beam to a beam propagation direction 158 passing through at least one trapping location of the plurality of trapping locations 116A-C, 816A-B and/or towards another one of the optical redirecting elements.

The light delivery system comprises the optics module 120, 820, the optical outcoupling element 130, 830, the optical refocusing element 140, 840 and the optical redirecting element(s) 150, 850. The light delivery system is integrated with the ion trap system. For instance, the light delivery system (or "optical system") for addressing the trapped ions is an integral part of the ion trap system.

The trap module 110, 810 (also called "trap chip") may be stacked on top of the optics module 120, 820 (also called "optics chip"). With such an arrangement, the ions may be trapped above the trap electrodes at the ion trapping locations, which may be arranged at a distance from the optics module, e.g. on the trap module's far side of the optics module. It is noted that the substrate of the trap module 110, 810 may be made of a material different from the material of the optics module 120, 820.

As mentioned above, it is an approach of the present disclosure to use a single light beam to illuminate a plurality of distinct and spatially distant ion trapping locations. A distance between any two mutually different ion trapping locations 116A-C, 816A-B may be greater than the width of the laser beam illuminating the ion trapping locations.

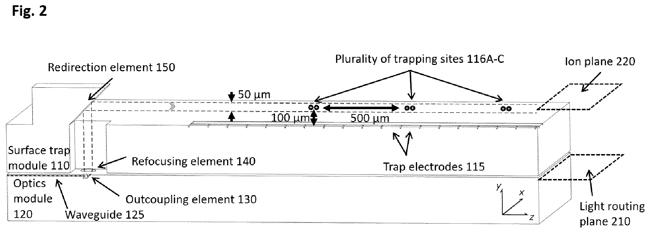

Exemplary distances are indicated in **Fig. 2,** where a diameter of the light beam is 50 $\mu$m, a distance between the trapping locations 116A and 116B is 500 $\mu$m, and a distance between the trap electrodes 115 and the center of the redirected light beam is 100 $\mu$m. It is noted that the diameter refers to twice the width (the width being defined as the beam radius corresponding to the distance across the beam where the intensity falls to $1/e^2$ of the peak value) of the light beam at the ion trapping locations. As the beam width may vary among mutually different ion trapping locations, the distance between any two mutually different ion trapping locations may be greater than the beam width at each of the plurality of ion trapping locations. Accordingly, the ions in mutually different trapping locations being illuminated by the same beam may have a distance to each other greater than the width of the laser beam.

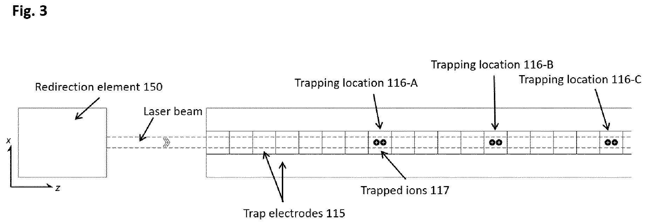

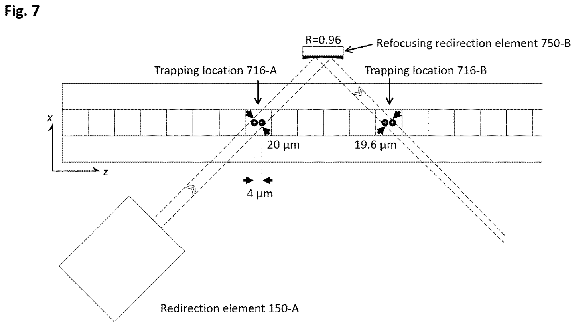

However, it is noted that a plurality of ions may be confined at a single ion trapping location, as for instance trapped ions 117 shown at ion trapping location 116A in **Fig. 3.** As an example, two ions confined within a single ion trapping location may be spaced apart by a (mean) distance of 4 $\mu$m between the centers of the ions, as shown in **Fig. 7** to be described later. It can be seen that the distance between two ions at a single ion trapping location is smaller than the beam width.

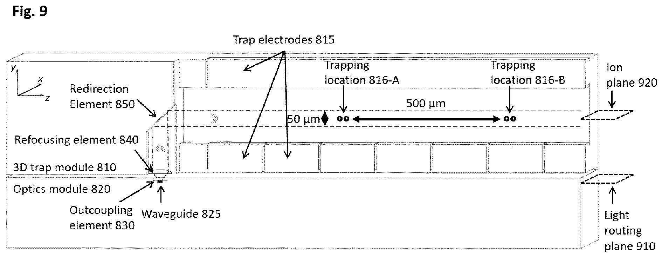

The ion trap module 110, 810 may comprise an optically traversable portion providing optical access, e.g. an optical access hole, for the light beam between the waveguide 125, 825 and the optical redirecting element 150, 850 (or "redirection element") and, subsequently, to the ion trapping locations. The optically traversable portion may accommodate the refocusing element 140, 840. As can be seen in **Fig. 2** and **Fig. 9,** the optically traversable portion may for instance comprise an opening (e.g. an opening slot or hole) in the chip substrate of the trap module 110, 810 and/or the trap electrodes 115, 815 and, e.g. in case of a 3D ion trap, comprise an opening between the electrodes. However, also other means of optical access such as an optically transparent window created by a transparent substrate and/or transparent conducting trap electrodes may be used.

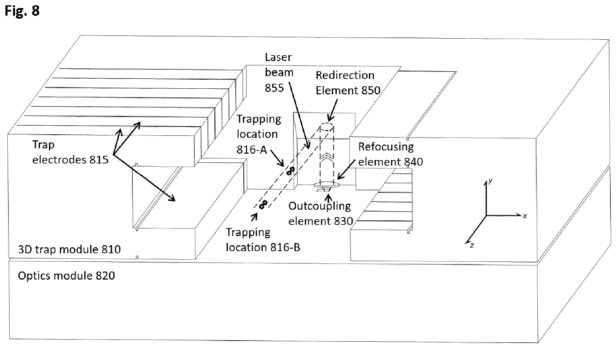

The ion trap may be, e.g., a surface trap, as shown in **Figures 1 to 7** with surface trap module 110, or a 3D trap, as shown in **Figures 8 to 13** with 3D trap module 810. For instance, the ion trap may be a linear surface trap or a linear 3D trap.

The trap module 110, 810 may comprise a trap module body and a set of (e.g. a plurality of) electrodes 115, 815. The trap module body may be formed at least partially from an insulating material, e.g. an insulating substrate, or from metal. In some embodiments, e.g. when the ion trap is a surface trap, the electrodes 115 may be arranged at one side of the trap module body, e.g. at a far side with respect to the optics module 120, as shown in **Fig. 2.** In some embodiments, e.g. when the ion trap is a 3D as shown in **Figures 8 and 9,** the electrodes 815 may be massive metal parts or may be formed by a conductive (e.g. metal) coating on a dielectric body. In the case of massive metal electrodes, the electrodes may be held in a mount, e.g. a cage-like support, made at least partially of an electrically insulating material, which may be a ceramic, a glass, or a crystalline material such as sapphire.

In the optics module 120, 820, the waveguide 125, 825 guides the light beam (e.g. a laser beam) before being coupled out at the outcoupling element 130, 830. The optics module may comprise a chip substrate. As can be further seen in **Fig. 2** as well as in **Fig. 9,** the waveguide may route the light beam within a light routing plane 210, 910 parallel to a surface of the chip substrate facing the trap module. The light routing plane may be provided on a surface of the optics module or sufficiently close to the surface to be cut by the outcoupling element.

The optics module 120, 820 may comprise a photonic integrated circuit (PIC). A PIC is an microfabricated device that contains, e.g. in or on a chip substrate, photonic components, which are components that determine, e.g. control and/or modify, the propagation of light (photons), e.g. by confining and guiding the light (through a waveguide), by switching the light propagation between different optical channels, by adjusting or modifying light parameters such as the light phase, intensity, frequency, or the like. For instance, the PIC may comprise one or more elements configured to control one or more parameters of the light beam out of: light polarization, frequency, intensity, amplitude, spatial mode profile and/or beam shape. Such optical elements in the PIC may comprise one or more elements out of mode converters, integrated electro-optical modulators, polarization control elements.

The waveguide 125, 825 may be part of the PIC. As an example, the waveguide 125, 825 may be a $Si_3N_4$ (SiN) waveguide.

The outcoupling element 130, 830 at the output end of the waveguide 125, 825 may be formed as a free space outcoupling element that couples the light beam out into the vacuum. Furthermore, the outcoupling element 130, 830 may comprise a deflecting element adapted to reflect or redirect the light beam. For instance, the deflecting element of the outcoupling element may be adapted to change the direction of the light beam from a guiding direction of the waveguide 125, 825 within the "light routing plane" 210, 910 to a direction pointing towards the surface trap module 110, 810 and towards the redirecting element 150, 850 or, in embodiments with more than one redirecting element, towards a first one of the one or more redirection elements 150, 850 on the light path. As illustrated in **Fig. 2, Fig. 8**, and **Figs. 17A**, **B**, the deflecting element of the outcoupling element 130, 830 may change the propagation-direction of the out-coupled light beams exiting the waveguide from being parallel (e.g. in-plane) with the optics chip surface facing the trap chip to a direction being near perpendicular (or having at least a component perpendicular) to it. In other words, the beam direction after passing through the outcoupling element may be substantially perpendicular to a waveguide direction along which the waveguide 125, 825 directed to guide the light beam. The direction pointing from the outcoupling element to the redirecting element may be called an "outcoupling direction", which is shown as a "vertical" or "y" direction in **Figures 2 and 9.**

As described above, the outcoupling element 130, 830 couples the light beam out of the waveguide into a direction pointing towards the trap module and may thereby deflect the light beam from a direction leading along the light routing plane to the direction pointing towards the trap module. Accordingly, the outcoupling element 130, 830 provides both outcoupling of the light beam out of the waveguide 125, 825 and deflection towards the trap module (and may be called "outcoupling and deflecting element").

For instance, both outcoupling and deflecting may be effected by a single element. Such a single element may be a grating coupler at the outcoupling end of the waveguide or a total reflection mirror, created for instance by applying a 45° cut into the waveguide using focused-ion beam milling.

Alternatively, the outcoupling element 130, 830 may comprise a deflecting element as an additional element, e.g. a micro-mirror integrated with the optics module 120, 820 (e.g. integrated with the PIC). Exemplary techniques for incorporating the deflecting element comprise etching a straight outcoupling facet into the waveguide to enable free-space propagation of the laser beam within the light routing plane over a short distance, within which the light beam propagates towards a 45° profile as a deflecting element, which deflects the beam towards the trap module 110, 810. The 45° profile may be etched out of the optics chip, e.g. using grayscale lithography, and subsequently metallizing the 45° profile. Alternatively, the 45° profile or ramp of the deflecting element may be realized in an additive manner on the optics module 120, 820, for instance, using 3D printing with subsequent metallization of the ramp.

It is noted that the above-mentioned "deflecting element" of the outcoupling element 130, 830, like the "redirecting element" 150, 850 described in more detail in the following, may be a mirror or mirror-like optical element configured to reflect the light beam. In the present disclosure, the term deflecting element for a reflecting part of the outcoupling element is used to distinguish from "redirecting element" (or redirection element") that redirects the beam to a direction following a line on the ion plane (or between ion planes).

The optical refocusing element 140, 840 may be a lens or lens system comprising at least one optical lens. The one or more lenses of the optical refocusing element may be a micro-manufactured lens (also called "microlens") or lenses. Possible types of microlens comprise, for instance, aspherical lens, meniscus lens, Fresnel lens, achromatic lens, or cylindrical lens. For instance, the lens system may be a stack of microlenses comprising one or more lenses such as the aforementioned types of lenses. In some embodiments, the lens or lenses of the refocusing element 140, 840 do not comprise so-called meta-lenses that perform diffraction based focusing rather than refraction based focusing.

The refocusing element 140, 840 is placed on the light path of the light beam between the outcoupling element 130, 830 and the first redirecting element 150, 850 among one or more redirecting elements. The refocusing element 140, 840 is adapted to focus or refocus the divergent laser beam, e.g. "collimate" the laser beam. This refocusing facilitates providing a well-defined and sufficiently precise intensity profile and/or shape of the beam at the ion locations, having the same or sufficiently similar intensity and/or beam width at different ion trapping locations located on the path of the laser beam after being redirected by redirecting element(s) 150, 850. For instance, one or more lenses of the optical refocusing element 140, 840 may comprise a cylindrical lens with different focal lengths along two different directions.

At the location of the refocusing element, a stack of optical elements may be provided, which may comprise, in addition to the optical refocusing element or integrated with the optical refocusing element, one or more optical elements configured to control one or more parameters of the light beam out of: light polarization, spatial mode profile and beam shape.

It is further noted that a suitable combination of the lens system as the refocusing element 140 and a design of the waveguide 125, 825 with the outcoupling element 130, 830 may be chosen to provide for a desired shape and/or intensity of the laser beam at the ion trapping locations, e.g. ellipticity of the laser beam radial intensity profile at the ion trapping locations. For instance, the waveguide 125, 825 may comprise a waveguide taper in a region adjacent to the outcoupling element 130, 830. The optical elements in the stack may comprise one or more elements out of microfabricated waveplate(s) for controlling e.g. the beam polarization, microfabricated phase plate(s) for controlling the beam shape or optical mode.

Each of the one or more redirecting elements 150, 850 is configured to redirect the refocused light beam to pass through at least one of the plurality of ion trapping location to address a trapped ion confined in the respective location and/or towards another one of the optical redirecting elements.

The one or more optical redirecting elements 150, 850 may be provided on the trap module 110, 810. For instance, the redirecting elements may be shaped on a surface of the trap module 110, 810 by etching or 3D printing and subsequent metallization.

As shown for instance in **Figures 1 to 3** as well as **Figures 8 and 9,** there may be only one redirecting element 150, 850 which redirects the beam towards a direction along which the light beam passes through a plurality of ion trapping locations 116A-C, 816A-B.

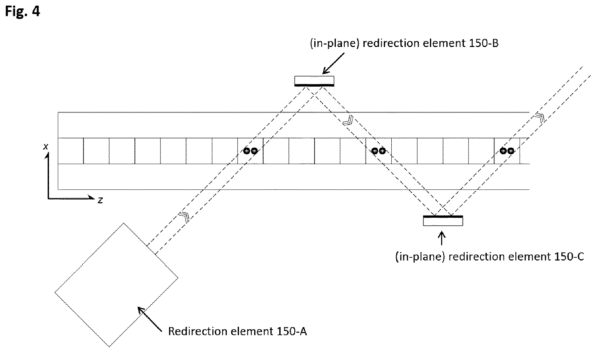

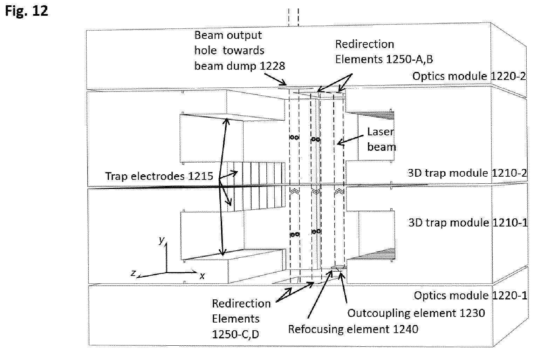

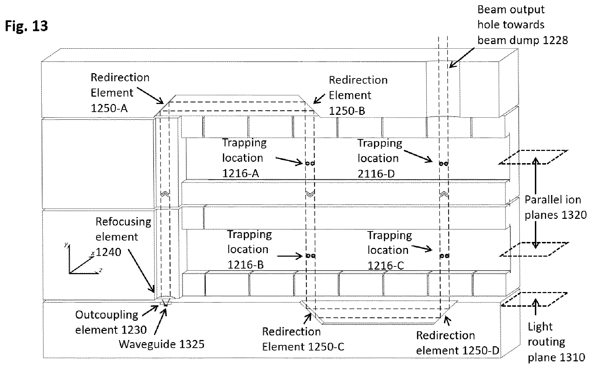

Alternatively, as shown in **Figures 4, 5, 6 and 7** as well as in **Figures 12 and 13,** there may be a plurality of redirecting elements each redirecting the light beam to a new direction. In each of these new directions, the redirected light beam passes through one or more ion trapping locations and/or is directed towards another redirecting element.

Irrespectively of whether a single redirecting element or a plurality of redirecting elements is employed, the plurality of ion trapping locations may lie in a plane 220, 920, named "ion plane" in **Figures 2 and 9,** which may be parallel to the light routing plane 210, 910. (It is noted that the light routing plane and the ion plane are parallel but not identical). For instance, the ion plane in which the laser beam propagates after being redirected may be essentially parallel to the PIC chip surface. The first (or the only) redirecting element in the light beam path may redirect the light beam, e.g. by 90°, to become parallel to the light routing plane and possibly, to the PIC surface.

**Figures 2 and 3** show an example where there is only one redirecting element 150. As shown in Fig. 2, the laser beam propagates, after being redirected by the redirection element 150, within the ion plane 220, parallel to the light routing plane and the optics module surface. Further, as shown in **Fig. 3,** the laser beam in the ion plane 220 after redirection may be aligned with an axial direction of a linear ion trap.

Alternatively, as shown in **Fig. 4,** in addition to a first redirecting element 150-A, further (in-plane) redirecting elements 150B-C, may be provided e.g. on the trap chip, downstream along the light path, to reflect the light beam a plurality of times to hit the plurality of ion trapping locations in the ion plane 220.

In the examples described so far, the plurality of ion trapping locations are hit by a single light beam. However, the present disclosure is not limited to the ion trapping locations being hit by a single light beam. Alternatively each of the plurality of ion trapping locations or at least a part of the plurality of ion trapping locations may be hit or illuminated by a plurality of light beams simultaneously. For instance, a plurality of waveguides may be provided in the optics module 120, 820 to route the plurality of laser beams, with respective outcoupling elements, and a plurality of optical refocusing elements may be provided to refocus the light beams before they are redirected by one or a plurality of respective redirecting elements. Each of the plurality of waveguides, outcoupling elements, refocusing elements and redirecting elements may correspond to the description of said elements as provided above.

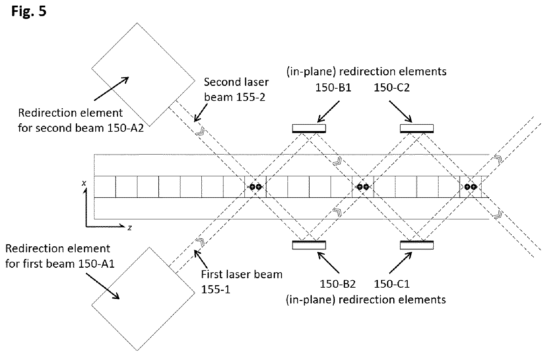

In addition, as shown in **Fig. 5,** a first set of redirecting elements 150-A1, B1, C1 may be provided to redirect a first laser beam 155-1 among the plurality of laser beams, and a second set of redirecting elements 150-A2, B2, C2 may be provided to redirect a second laser beam 155-2 among the plurality of laser beams. It is noted that although a plurality of redirecting elements are shown in **Fig. 5** to redirect each light beam a plurality of times, it is also possible that each light beam is redirected only by a respective first redirecting element 150-A1, 150-B1.

It is noted that the expression "first redirecting element" is used to mean both a single redirecting element in the ion plane, as shown e.g. in **Fig. 3,** as well as a first redirecting element along the beam propagation path in the ion plane that is followed on the light path by subsequent (e.g. in-plane) redirecting elements, as shown e.g. in **Fig. 4).** Furthermore, the first redirecting element may direct the light beam to a direction pointing towards one or more ion trapping locations, as shown e.g. in **Fig. 1,** or to a direction pointing towards another redirecting element without ion trapping locations between the redirecting elements, as shown e.g. in **Fig. 13.**

Illuminating each ion trapping location by a plurality of light beams may facilitate varying or adjusting other light parameters at the ion trapping location(s). For instance, the geometrical arrangement of the redirecting elements on opposite sides of the electrodes may be chosen in a manner that a component (the "x" component in **Fig. 5)** of the light beam direction forms a standing wave.

The direction of the standing wave defines the strength of the light field interaction with a given motional mode of the trapped ions. For instance, a standing wave along the x-direction would allow to implement an entangling gate of ions using a motional mode oriented predominantly along the x-direction. Similarly, a standing wave along the z-direction would allow to employ a motional mode along the z-direction to mediate e.g. an entangling gate.

In some embodiments, the electrodes of the trap module form a plurality of ion traps, e.g. an array of a plurality of ion traps. As shown in the following, both surface traps as well as 3D traps may be provided as an array of a plurality of ion traps in the trap module.

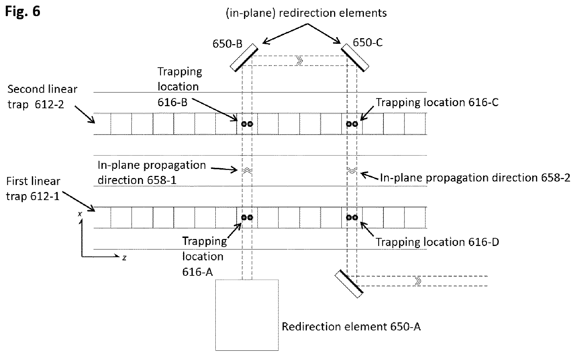

An example of a plurality of surface traps is shown in **Fig. 6** where two linear traps 612-1 and 612-2 are provided to confine ions at a plurality of ion trapping locations 616-A-D, which are supplied with light from a single light beam and which lie within a single ion plane. As shown in **Fig. 6,** the light beam is redirected to a first in-plane light propagation direction 658-1 within the ion plane by the first redirection element 650-A, where it hits (and/or passes through) trapping location 616-A of the first linear trap 612-1 and trapping location 616-B of the second ion trap 612-2. Subsequently, the light beam is redirected within the ion plane by two redirecting elements respectively by 90° to a second light propagation direction 658-2 counterpropagating and shifted along z with respect to propagation direction 658-1, along which the light beam hits trapping location 616-C of the second linear trap 612-2 and trapping location 616-D of the first linear trap 612-1.

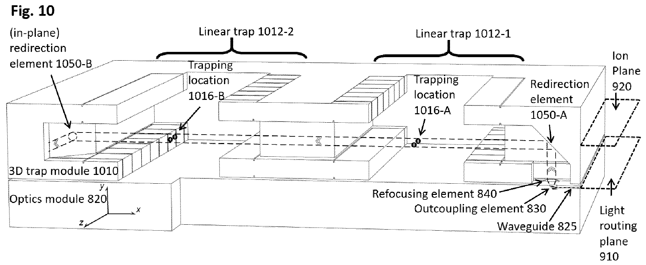

As a further example of such an array of ion traps, **Fig. 10** shows a 3D trap module 1010 with a 3D trap array comprising two laterally adjacent linear ion traps 1012-1 and 1012-2. Linear trap 1012-1 is operable to confine ions at trapping location 1016-A, and linear trap 1012-2 is operable to confine ions at trapping location 1016-B, wherein both trapping locations 1016-A and 1016-B lie within ion plane 920. In addition to the first redirecting element 1050-A that redirects the light beam from a direction perpendicular to the ion plane to a direction within the ion plane 920, a second redirecting element 1050-B redirects the ion beam within the ion plane. After being redirected by the second redirecting element, the light beam may hit another ion trapping location (not shown in Fig. 10).

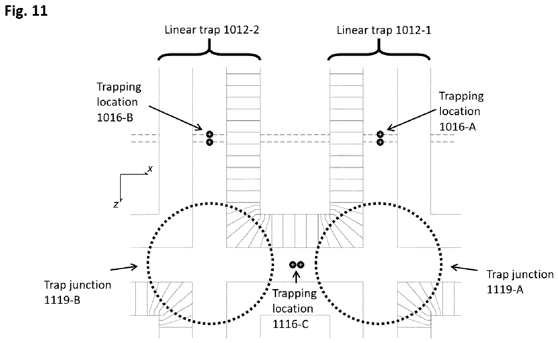

A trap module with an array of a traps as shown e.g. in **Fig. 10** may comprise one or more trap junctions configured to move the confined ions between mutually different ion traps of the plurality of arrayed ions traps. As an example, **Fig. 11** is a top view zoom-out on the structure of **Fig. 10,** where additional portions of the linear traps 1012-1, 1012-2 are shown in positive "z" direction in the ion plane, with trap junctions 1119-A and 1119-B connecting the two traps via an additional linear trap portion such that ions being transported e.g. from trapping location 1016-A to trapping location 1016-B will pass through trapping location 1016-C. It is noted that in an arrangement as shown in Fig. 11, trapping location 1116-C may serve as a transition point for the transported ion between trapping locations 1016-A and 1016-B, where trapping locations 1016-A and 1016-B are arranged along the light path, whereas trapping location 1016-C need not be illuminated by the laser light.

In general, the beam width, divergence, and/or light intensity (e.g. laser beam intensity) of the light beam may vary at the plurality of ion trapping locations through which the light beam passes along the light path. Possible exemplary reasons for a variation in the light beam intensity of the light beam may comprise optical power loss, such as reflection loss and/or beam divergence.

To adjust beam width and divergence along the propagation path, and/or to compensate for the aforementioned variations in light intensity, elements may be provided to refocus the light beam along its propagation path.

As a possible implementation, one or more from among the optical redirecting elements 150, 850 may be formed as "refocusing redirecting elements". For instance, these redirecting elements (e.g. focusing or parabolic (micro-) mirrors) that reflect the light to hit multiple ion trapping locations may be formed to (repetitively) refocus the light so as to increase the effective collimated propagation length and/or to compensate for beam intensity loss from mirror absorption by a tighter focus and/or beam waist.

An example of such a "refocusing redirecting element" is shown in **Fig. 7,** where the redirecting element 750-B is provided as a curved (e.g. concave) mirror. At a first trapping location upstream of redirecting element 750-B on the light path, the light beam of the depicted example has a beam diameter of 20 $\mu$m. In the example of Fig. 7, the redirecting element 750-B has a reflectance R = 0.96. To compensate for the loss in light intensity after reflection, the redirection element 750-B refocuses the light beam so as to have a beam diameter of 19.6 $\mu$m at the second trapping location.

As another possible implementation alternative to the redirecting elements themselves having refocusing capabilities as described above, the one or more "second" optical refocusing elements may be provided as separate optical elements different from the optical redirecting elements. In other words, one or more second optical refocusing elements different from the one or more optical redirecting elements. The second optical redirecting elements may be configured to refocus the light beam subsequent to redirection by the one or more redirecting elements, e.g. in the ion plane(s) or on its path between ion plane(s). It is noted that the term "second" refocusing element is used to distinguish these additional refocusing elements from the above-described ("first") optical refocusing element 140, 840 that is arranged between the outcoupling element 130 and the first redirecting element 150, 850. For instance, a separate (second) refocusing element may be an additional microlens or microlens systems arranged respectively between a redirecting element and a corresponding ion trapping location on the light path, which may be attached to the redirecting element or provided at a distance from the redirecting element.

A plurality of such second refocusing elements may further be combined, or a combination of a "refocusing redirecting element" with "second refocusing elements" may be provided, to control beam parameters such as beam width or ellipticity along the propagation path of the laser beam, e.g. by forming a lens telescope with given magnification.

Providing refocusing redirecting elements or additional refocusing elements may thus facilitate having similar light beam properties at the ion trapping locations for possibly identical quantum gates performed simultaneously at different trapping locations.

Although Fig. 7 shows an arrangement of redirecting elements and ion trap similar to the arrangement shown in Fig. 4, the use of refocusing elements, integrated with the redirecting elements or provided as separate optical elements, is not limited to this particular arrangement, and may be applied to any geometrical arrangement of trap and light delivery system in accordance with the present disclosure. Furthermore, while in Fig. 7, the second redirecting element 750-B along the light path is shown as a refocusing element, the first redirecting element 150-A may be provided as a refocusing element as well.

In the examples described so far, the ion trapping locations are arranged in a single ion plane parallel to the light routing plane. However, the present disclosure also provides embodiments where each of the plurality of trapping locations lies in either one of a plurality of ion planes, wherein the plurality of ion planes are mutually different planes parallel to the light routing plane.

For instance, as shown in **Figures 12 and 13,** two ion trap modules, e.g. 3D trap modules, may be vertically (in "y" direction, perpendicular to the light routing plane 1310) stacked. A first trap module 1210-1 with electrodes 1215 may be stacked on optics module 1220-1, in which waveguide 1325 is guiding light along the light routing plane 1310, which is coupled out and deflected out of the light routing plane at outcoupling element 1230. A second trap module 1210-2 with further electrodes 1215 may be stacked on the first trap module 1210-1. The electrodes 1215 of the first trap module 1210-1 confine ions in ion trapping locations 1216-B, 1216-C, and the electrodes 1215 of the second trap module confine the ions within ion trapping locations 1216-A, 1216-D.

As can be further seen in **Fig. 13,** the outcoupled light beam is refocused by refocusing element 1240 and redirected by redirecting elements 1250-A and 1250-B. Redirecting element 1250-B redirects the light beam towards trapping locations 1216-A and 1216-B on the different parallel ion planes 1320, before being redirected again by redirecting elements 1250-C and 1250-D before hitting ion trapping locations 1216-C and 1216-D.

As shown in **Fig. 12,** redirecting elements 1250-C and 1250-D are provided within optics module 1220-1. Furthermore, a second optics module 1220-2 comprising redirecting elements 1250-A and 1250-B is stacked upon 3D trap module 1210-2. However, in embodiments with a plurality of trap modules and/or a plurality of parallel ion planes, the redirecting elements may be provided on or within the trap modules as well, similar to the above-described embodiments with a single ion plane.

With a plurality of ion planes, it possible that an ion is transferred from one ion plane into another ion plane using trap junctions.

It is noted that if the ion trapping locations are distributed among a plurality of ion planes parallel to the light routing plane in the optics module, the ion trapping locations may still lie within one plane perpendicular to the ion planes, as can be seen in **Figures 12 and 13.**

Furthermore, a distance between any two mutually different ion planes may be greater than the width of the refocused light beam. In such case, the distance between ion trapping locations on different ion planes is greater than the width of the light beam, as described above.

After being redirected one or more times and hitting a plurality of ion trapping locations, at the end of the optical path in the light delivery system, the light beam may be directed towards a beam dump. For instance, among the redirecting elements, a last one of the redirecting elements along the light path of the light beam may be provided to eventually redirect the light beam towards a beam dump.

A beam dump (or beam block or beam stop) is an optical element configured to absorb the light of the beam. A beam dump may be made of a material with strong absorption and low reflectance, such as acrylic paint, carbon nanotubes, anodized aluminum, or nickel-phosphorous (Ni-P) coatings. The beam dump may be located outside of the vacuum environment in which the trap assembly is being operated and the light of the beam may be directed towards that beam dump through a vacuum viewport.

An example is shown in **Figures 12 and 13,** where redirecting element 1250-D, as the final redirecting element along the light path, redirects the light beam to a direction leading through a beam output hole 1228 (or opening) towards the beam dump.

As can be seen in **Figures 12** and **13,** the redirecting element may be one of the redirecting elements that directs the light beam to one or more trapping locations before being output to the beam dump. Alternatively, an additional redirecting element may be provided, without any trapping locations on the path section between this redirecting element and the output towards the beam dump.

Furthermore, the provision of a beam dump is not limited to the multi-ion plane example depicted in **Figures 12 and 13.** An output hole may be provided in one of the one or more optics modules or in one of the one or more trap modules of the trap and light delivery system. Any arrangement of ion trap system with light delivery system as described herein may additionally have a beam dump at the output end of the light path.

Provision of a beam dump at the output end of the light path provides a well-defined beam exit and may facilitate preventing or reducing the occurrence of undesired light scattering and/or stray light or resulting stray electric fields created e.g. by uncontrolled light absorption in dielectric material.

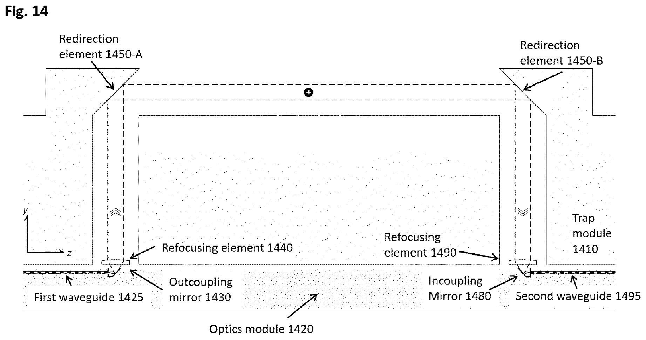

However, as an alternative to disposal of the light beam in a beam dump, the light beam may be reused by coupling the light beam into a second waveguide. For instance, as shown in **Fig. 14,** among the one or more redirecting elements 1450-A, 1450-B, an optical redirecting element 1450-B may be configured to redirect the light beam towards the optics module 1420.

The ion trap system may further comprise an optical incoupling element 1480 configured to couple the light beam into the second waveguide 1495.

Like the first waveguide 1425 from which the light beam is coupled out by outcoupling element 1430, the second waveguide 1495 may be comprised by the optics module 1420, where it may be guided within the light routing plane. Corresponding to the refocusing element 1440 which refocuses the light beam coupled out of the first waveguide, a refocusing element 1490 may be provided on the light path between redirection element 1450-B and incoupling element 1480 that couples the light beam into the second waveguide 1495.

While **Fig. 14** shows one ion being trapped at a trapping location of trap module 1410, it is noted that this arrangement is provided for illustrating the approach of incoupling the used waveguide into a second waveguide. However, this approach of incoupling into a second waveguide may be combined with any arrangement of trap system with integrated optical system, including embodiments where the light beam passes through a plurality of ion trapping locations, including those embodiments described with respect to Figures 1 to 13.

As described above for the beam dump, a final redirecting element may direct the light beam towards a direction where it passes one or more ion trapping locations before hitting the incoupling element, or be provided as an additional redirecting element, without any ion trapping locations between the final redirecting element and the incoupling element.

Provision of a second waveguide and incoupling the light beam into the second waveguide after illuminating ion trapping locations may contribute to an efficient usage of the light beam, which may be further enhanced by directing the light beam through a plurality of ion trapping locations. Furthermore, like the beam dump, the incoupling provides for a beam exit and may facilitate prevention or reduction of undesired scattering or stray fields.

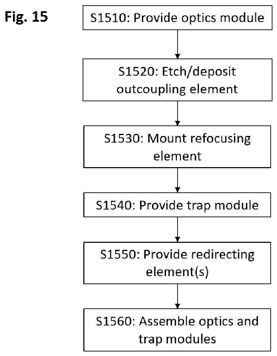

In correspondence with the ion trap system with integrated light delivery system described herein, further provided is a microfabrication method for manufacturing an ion trap with an integrated light delivery system. As shown in Fig. **Fig. 15,** the method comprises: step S1510 of providing an optics module comprising an optical waveguide for routing a light beam; step S1520 of etching or depositing an optical outcoupling element for coupling the light beam out of the waveguide into a direction pointing towards a trap module into the optical waveguide; step S1530 of mounting, on the optics module an optical refocusing element for refocusing the light beam; step S1540 of providing the trap module, wherein the trap module comprises electrodes for confining ions at a plurality of trapping locations; a step S1550 of providing, on the trap module, one or more optical redirecting elements each being for redirecting the refocused light beam to a direction passing through at least one of the plurality of trapping locations and/or towards another one of the one or mode redirecting elements; and a step S1560 of assembling the optics module and the trap module.

The optics module provided in step S1510 may be an optics module manufactured using microlithography or nano-lithography. For instance, the waveguide (or waveguides) on the PIC chip may be fabricated using standard lithographic methods, to produce a waveguide from SiN (Silicon nitride) in an SiO2 (Silicon oxide) cladding on top of a Silicon substrate.

For instance, the PIC chip and the waveguide may be formed using lithographic methods, where waveguide material is deposited in a layer onto a substrate material wafer and subsequently patterned to form individual waveguides or, in the case of the present disclosure, a single waveguide. With this technique, the waveguide (or waveguides) lie in one plane, given by the substrate surface.

The method may comprise metallizing, at least partially, a surface of the optics module where the waveguide is located. A region on the surface where the optical outcoupling element is to be etched or deposited may be excluded from the metallization. For instance, the optics chip surface may be partially coated with metal using a metal evaporation or sputter process. A metallized surface may shield trapped ions from stray charges on the substrate and be used as a contact surface for a bond, e.g. thermo-compression bond for metal-bonding between trap chip and optics chip as a possible technique for connecting the chips.

In step S1520, the micro-fabricated outcoupling element for coupling the light out of the waveguide may be created using grayscale lithography to etch a cavity and micro-mirror surface into the optics chip surface with subsequent metallization of the mirror surface, or using focused ion beam milling. Alternatively, the outcoupling element may be realized by a total-internal reflection surface cut into the waveguide using a focused ion beam milling process. As a further alternative, depositing of the outcoupling element is also possible, as described above.

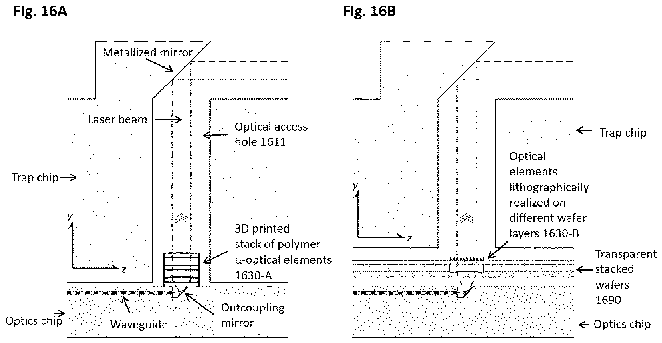

In step S1530, the optical refocusing element may be mounted on the optics module using a 3D printing technique such as polymer printing or glass printing. For instance, a lens system including microlenses as the refocusing element, for beam refocusing (e.g. collimation) may be created using a 3D polymer print process, wherein the lens system may be directly printed onto the optics chip surface. Therein, polymer printed spacing elements may be used. The 3D printing may comprise other optical elements for controlling optical parameters, and a stack of optical elements including the lens system may be printed on the optics chip. Such a 3D printed stack of polymer printed micro-optical elements pointing into an optical access hole , including microlenses, is shown as a refocusing element 1630-A in **Fig. 16A.**

Alternatively, the refocusing element may be formed on a single separate wafer or a stack of wafers using micro- or nano-lithography, e.g. micro- or nano-lithographic methods such as nanoimprinting, grayscale lithography, or binary lithography. The wafer or the stack of wafers may be fixed to the optics module by bonding, gluing, or mechanical fixing. **Fig. 16B** shows a refocusing element 1630-B comprising optical elements that are lithographically realized on different wafer layers of transparent stacked wafers 1690.

Step S1540 of providing a trap module may comprise providing an electrically insulating substrate. This insulating substrate may then be etched by laser-assisted etching to 3D form a trap body including an optical access for the light beam and isolating trenches for providing isolation between the electrodes.

For instance, the ion trap chip may be fabricated using a selective laser etching (SLE) process to etch the 3D shape of the ion trap out of an electrically insulating substrate material such as fused silica or sapphire. In the same process step, trenches with undercut between adjacent trap electrodes may be created.

The 3D-formed trap body may then be metalized to create the electrodes. For instance, the trap surfaces may be metallized, e.g. coated with metal using a metal evaporation or sputter process to create the individual trap electrodes. In this metallization process, a conductive layer may be created, where electrodes are electrically isolated from each other by the trenches. Furthermore, surfaces for metal-bonding between trap chip and optics chip may possibly be created by metallization such as the aforementioned evaporation or sputtering...

Step S1550 of providing the one or more redirecting elements may comprise laser-assisted etching, on the electrically insulating substrate, of surfaces shaped as the one or more redirecting elements and laser polishing of the surfaces shaped as the one or more redirecting elements. For instance, the optical access hole and micro-fabricated mirror on the trap chip may be created as part of the 3D-patterning in an SLE process (and possibly laser polished afterwards). Alternatively, the one or more redirecting elements may be 3D printed on the trap surface. After etching (and possibly laser polishing) or 3D printing, the one or more redirecting elements (e.g. mirror surfaces) may be metallized, e.g. in an evaporation or sputter process.

It is noted that the etching or otherwise performed provision of the access hole is not limited to the optical access 1611 between the refocusing element 1630 and the first redirecting element, but may comprise providing optical access along the entire optical path through the vacuum, possibly to further redirecting elements and/or to a beam dump or recoupling element at the end of the optical path.

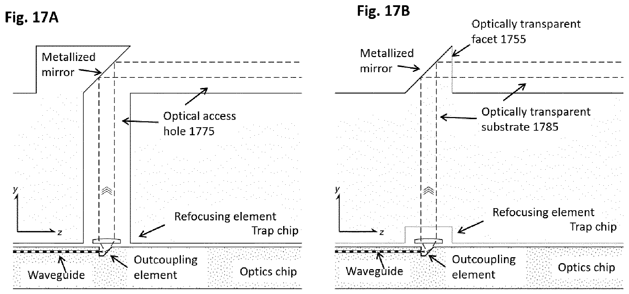

As an alternative to an optical access hole etched into the trap module, the light may be transmitted through the substrate of the trap chip. Accordingly, according to the present disclosure, the light beam may be directed either through an optical access hole 1775 in the trap module, as shown in **Fig. 17A**, or through the optically transparent substrate 1785 of the trap module, as shown in **Fig. 17B**.

In step S1560, the trap module and the optics module may be connected together using a bonding process such as thermo-compression bond, dielectric bond, etc. Other assembly processes that may be alternatively used in step S1560 comprise gluing using a glue, or mechanical fixing using a mechanical fixture such as tongue and groove.

If the light is to transmit through the (optically transparent) trap chip substrate 1785, the input and output facets into the substrate may be laser-polished to achieve optical quality (transparent) facets. Subsequently, the one or more redirecting elements may be realized, e.g. using total internal reflection on a prism shaped 3D structure on the trap chip.

It is noted that step S1550 has been described for provision of the one or more redirecting elements on the trap module. As mentioned above and shown in **Figures 12 and 13,** a part or all of the one or more redirecting elements may be provided on the optics module comprising the waveguide or on an additional optics module. In such case, the above-described techniques of step S1550 may be applied to the substrate of the optics module rather than the substrate of the trap module.

As described above, the present disclosure provides optics integration approaches using mircrofabricated optics for ion traps that may facilitate reusing light of a light beam to illuminate more than a single ion trapping location, e.g. within one or more ion planes of an ion trap system.

However, it is noted that the ion trap and light delivery system of the present disclosure may be applied to an arrangement with only one ion trapping location, e.g. any one out of the three ion trapping locations 116A-C or 816A-B shown in **Fig. 1** and **Fig. 8**. Also, when illuminating a single trapping location, the present disclosure provides an integrated approach to ion trap addressing without the geometric limitations of using laser beams coming from outside vacuum.

According to an embodiment, provided is a microfabricated ion trap system with an integrated microfabricated light delivery system for addressing confined ions with a light beam, the ion trap system comprising: a trap module comprising electrodes configured to confine the ions at a plurality of trapping locations; an optics module comprising an optical waveguide configured to route the light beam; an optical outcoupling element configured to couple the light beam out of the waveguide into a direction pointing towards the trap module; an optical refocusing element configured to refocus the light beam; and one or more optical redirecting elements, each of the one or more optical redirecting elements being configured to redirect the refocused light beam to a direction passing through at least one of the plurality of trapping locations and/or towards another one of the one or mode redirecting elements.

In some exemplary implementations, a distance between any two mutually different trapping locations among the plurality of trapping locations illuminable by the light beam is greater than the width of the refocused light beam.

In some exemplary implementations, the optics module comprises a chip substrate and the waveguide is routing the light beam within a light routing plane parallel to a surface of the chip substrate facing the trap module.

In some exemplary implementations, the plurality of trapping locations lies in a plane parallel to the light routing plane.

In some exemplary implementations, each of the plurality of trapping locations lies in either one of a plurality of ion planes, the plurality of ion planes being mutually different planes parallel to the light routing plane.

In some exemplary implementations, a distance between any two mutually different ion planes among the plurality of ion planes is greater than the width of the refocused light beam.

In some exemplary implementations, the one or more optical redirecting elements are configured to refocus the light beam, and/or said optical refocusing element is a first optical refocusing element, and the ion trap system comprises one or more second optical refocusing elements different from the one or more optical redirecting elements, the second optical refocusing elements being configured to refocus the light beam subsequent to redirection by the one or more redirecting elements.

In some exemplary implementations, the ion trap system comprises, among the one or more optical redirecting elements or provided as an additional redirecting element, an optical redirecting element configured to redirect the light beam towards a beam dump.

In some exemplary implementations, the optics module comprises a second waveguide and the ion trap system comprises, among the one or more optical redirecting elements or provided as an additional redirecting element, an optical redirecting element configured to redirect the light beam towards the optics module; and an optical incoupling element configured to couple the light beam into the second waveguide.

In some exemplary implementations, the ion trap system comprises a stack of optical elements at a location of the optical refocusing element, the stack of optical elements comprising the optical refocusing element and one or more optical elements configured to control one or more parameters of the light beam out of: light polarization, spatial mode profile and beam shape.

In some exemplary implementations, the electrodes of the trap module form an array of a plurality of ion traps.

In some exemplary implementations, the trap module comprises one or more trap junctions configured to move the confined ions between mutually different ion traps of the plurality of ions traps.

In some exemplary implementations, the optics module comprises a photonic integrated circuit, PIC, the PIC comprising one or more elements configured to control one or more parameters of the light beam out of: light polarization, frequency, intensity, amplitude, spatial mode profile and/or beam shape.

Further provided is a microfabrication method for manufacturing an ion trap with an integrated microfabricated light delivery system, comprising: providing an optics module comprising an optical waveguide for routing a light beam; etching and/or depositing an optical outcoupling element for coupling the light beam out of the waveguide into a direction pointing towards a trap module into the optical waveguide; mounting, on the optics module, an optical refocusing element for refocusing the light beam; providing the trap module, wherein the trap module comprises electrodes for confining ions at a plurality of trapping locations; providing, on the trap module, one or more optical redirecting elements each being for redirecting the refocused light beam to a direction passing through at least one of the plurality of trapping locations and/or towards another one of the one or mode redirecting elements; and assembling the optics module and the trap module.

In some exemplary implementations, the optics module is manufactured using micro- or nano-lithography; the method comprises metallizing, at least partially, a surface of the optics module where the waveguide is guided, excluding a region where the optical outcoupling element is to be etched; the optical refocusing element is mounted on the optics module using three-dimensional polymer printing or glass printing or formed on a single separate wafer or a stack of wafers using micro- or nano-lithography, and the wafer or the stack of wafers is fixed to the optics module by bonding, gluing, or mechanical fixing; the provision of the trap module comprises: providing an electrically insulating substrate, laser-assisted etching of the electrically insulating substrate to three-dimensionally, 3D-, form a trap body including an optical access for the light beam and isolating trenches between the electrodes; and metallizing the 3D-formed trap body to create the electrodes; the provision of the one or more redirecting elements comprises: laser-assisted etching, on the electrically insulating substrate, of surfaces shaped as the one or more redirecting elements and laser polishing of the surfaces shaped as the one or more redirecting elements, or 3D printing of the one or more redirecting elements onto the trap surface; and metallizing the one or more redirecting elements; and the optics module and the trap module are assembled by bonding, gluing, or mechanical fixing.

Summarizing, provided is a microfabricated ion trap system with an integrated light delivery system for addressing confined ions with a light beam, and a microfabrication method for manufacturing a microfabricated ion trap system with an integrated light delivery system. The system comprises an optical refocusing element (e.g. a micro-fabricated lens system) to refocus or collimate the laser beam coupled out of a PIC chip waveguide and one or more optical redirecting elements (e.g. a microfabricated mirrors) to redirect the laser beam, such that the light propagates in or through a plane or a plurality of planes aligned with the ion trapping locations in the ion trap.

**Claims**

1. A microfabricated ion trap system with an integrated microfabricated light delivery system for addressing confined ions with a light beam, the ion trap system comprising:

   a trap module comprising electrodes configured to confine the ions at a plurality of trapping locations;
   an optics module comprising an optical waveguide configured to route the light beam;
   an optical outcoupling element configured to couple the light beam out of the waveguide into a direction pointing towards the trap module;
   an optical refocusing element configured to refocus the light beam; and
   one or more optical redirecting elements, each of the one or more optical redirecting elements being configured to redirect the refocused light beam to a direction passing through at least one of the plurality of trapping locations and/or towards another one of the one or mode redirecting elements.

2. The ion trap system according to claim 1, wherein a distance between any two mutually different trapping locations among the plurality of trapping locations illuminable by the light beam is greater than the width of the refocused light beam.

3. The ion trap system according to any one of claims 1 or 2, wherein the optics module comprises a chip substrate and the waveguide is routing the light beam within a light routing plane parallel to a surface of the chip substrate facing the trap module.

4. The ion trap system according to claim 3, wherein the plurality of trapping locations lies in a plane parallel to the light routing plane.

5. The ion trap system according to claim 3, wherein each of the plurality of trapping locations lies in either one of a plurality of ion planes, the plurality of ion planes being mutually different planes parallel to the light routing plane.

6. The ion trap system according to claim 5, wherein a distance between any two mutually different ion planes among the plurality of ion planes is greater than the width of the refocused light beam.

7. The ion trap system according to any one of claims 1 to 6, wherein:

   the one or more optical redirecting elements are configured to refocus the light beam, and/or said optical refocusing element is a first optical refocusing element, and the ion trap system comprises one or more second optical refocusing elements different from the one or more optical redirecting elements, the second optical refocusing elements being configured to refocus the light beam subsequent to redirection by the one or more redirecting elements.

8. The ion trap system according to any one of claims 1 to 7, comprising, among the one or more optical redirecting elements or provided as an additional redirecting element, an optical redirecting element configured to redirect the light beam towards a beam dump.

9. The ion trap system according to any one of claims 1 to 7, wherein the optics module comprises a second waveguide and

   the ion trap system comprises, among the one or more optical redirecting elements or provided as an additional redirecting element, an optical redirecting element configured to redirect the light beam towards the optics module; and
   an optical incoupling element configured to couple the light beam into the second waveguide.

10. The ion trap system according to any one of claims 1 to 9, comprising a stack of optical elements at a location of the optical refocusing element, the stack of optical elements comprising the optical refocusing element and one or more optical elements configured to control one or more parameters of the light beam out of: light polarization, spatial mode profile and beam shape.

11. The ion trap system according to any one of claims 1 to 10, wherein the electrodes of the trap module form an array of a plurality of ion traps.

12. The ion trap system according to claim 11, wherein the trap module comprises one or more trap junctions configured to move the confined ions between mutually different ion traps of the plurality of ions traps.

13. The ion trap system according to any one of claims 1 to 12, wherein the optics module comprises a photonic integrated circuit, PIC, the PIC comprising one or more elements configured to control one or more parameters of the light beam out of: light polarization, frequency, intensity, amplitude, spatial mode profile and/or beam shape.

14. A microfabrication method for manufacturing an ion trap with an integrated microfabricated light delivery system, comprising:

> providing an optics module comprising an optical waveguide for routing a light beam;
> etching and/or depositing an optical outcoupling element for coupling the light beam out of the waveguide into a direction pointing towards a trap module into the optical waveguide;
> mounting, on the optics module, an optical refocusing element for refocusing the light beam;
> providing the trap module, wherein the trap module comprises electrodes for confining ions at a plurality of trapping locations;
> providing, on the trap module, one or more optical redirecting elements each being for redirecting the refocused light beam to a direction passing through at least one of the plurality of trapping locations and/or towards another one of the one or mode redirecting elements; and
> assembling the optics module and the trap module.

15. The microfabrication method according to claim 14, wherein

> the optics module is manufactured using micro- or nano-lithography;
> the method comprises metallizing, at least partially, a surface of the optics module where the waveguide is guided, excluding a region where the optical outcoupling element is to be etched;
> the optical refocusing element is mounted on the optics module using three-dimensional polymer printing or glass printing or formed on a single separate wafer or a stack of wafers using micro- or nano-lithography , and the wafer or the stack of wafers is fixed to the optics module by bonding, gluing, or mechanical fixing;
> the provision of the trap module comprises:
>
> > providing an electrically insulating substrate,
> > laser-assisted etching of the electrically insulating substrate to three-dimensionally, 3D-, form a trap body including an optical access for the light beam and isolating trenches between the electrodes; and
> > metallizing the 3D-formed trap body to create the electrodes;
>
> the provision of the one or more redirecting elements comprises:
>
> > laser-assisted etching, on the electrically insulating substrate, of surfaces shaped as the one or more redirecting elements and laser polishing of the surfaces shaped as the one or more redirecting elements, or 3D printing of the one or more redirecting elements onto the trap surface; and metallizing the one or more redirecting elements; and

the optics module and the trap module are assembled by bonding, gluing, or mechanical fixing.

**Fig. 1**

**Fig. 2**

**Fig. 3**

Trapping location 116-B

Trapping location 116-A

Trapping location 116-C

Redirection element 150

Laser beam

x

z

Trap electrodes 115

Trapped ions 117

**Fig. 4**

(in-plane) redirection element 150-B

(in-plane) redirection element 150-C

Redirection element 150-A

**Fig. 5**

Redirection element
for second beam 150-A2

Second laser
beam 155-2

(in-plane) redirection elements
150-B1        150-C2

Redirection element
for first beam 150-A1

First laser beam
155-1

150-B2        150-C1
(in-plane) redirection elements

**Fig. 6**

**Fig. 7**

**Fig. 8**

**Fig. 9**

**Fig. 10**

(in-plane)
redirection
element 1050-B

Linear trap 1012-2

Linear trap 1012-1

Ion
Plane
920

Trapping
location
1016-B

Trapping
location
1016-A

Redirection
element
1050-A

3D trap module 1010

Optics module 820

Refocusing element 840

Outcoupling element 830

Waveguide 825

Light
routing
plane
910

**Fig. 11**

Linear trap 1012-2

Linear trap 1012-1

Trapping location 1016-B

Trapping location 1016-A

Trap junction 1119-B

Trapping location 1116-C

Trap junction 1119-A

**Fig. 12**

Beam output hole towards beam dump 1228

Redirection Elements 1250-A,B

Optics module 1220-2

Laser beam

Trap electrodes 1215

3D trap module 1210-2

3D trap module 1210-1

y

z x

Optics module 1220-1

Redirection Elements 1250-C,D

Outcoupling element 1230

Refocusing element 1240

**Fig. 13**

Beam output
hole towards
beam dump 1228

Redirection
Element
1250-A

Redirection
Element
1250-B

Trapping
location
1216-A

Trapping
location
2116-D

Parallel ion
planes 1320

Refocusing
element
1240

Trapping
location
1216-B

Trapping
location
1216-C

Outcoupling
element 1230

Waveguide 1325

Redirection
Element 1250-C

Redirection
element 1250-D

Light
routing
plane 1310

**Fig. 14**

Redirection element 1450-A

Redirection element 1450-B

Refocusing element 1440

Refocusing element 1490

Trap module 1410

Outcoupling mirror 1430

Incoupling Mirror 1480

First waveguide 1425

Second waveguide 1495

Optics module 1420

**Fig. 15**

S1510: Provide optics module

↓

S1520: Etch/deposit
outcoupling element

↓

S1530: Mount refocusing
element

↓

S1540: Provide trap module

↓

S1550: Provide redirecting
element(s)

↓

S1560: Assemble optics and
trap modules

**Fig. 16A**

Metallized mirror

Laser beam →

Trap chip →

Optical access
hole 1611

$y$

$z$

3D printed
stack of polymer
μ-optical elements
1630-A

Optics chip →

Waveguide

Outcoupling
mirror

**Fig. 16B**

← Trap chip

Optical
elements
lithographically
realized on
different wafer
layers 1630-B

$y$

$z$

Transparent
← stacked
wafers
1690

← Optics chip

**Fig. 17A**

Metallized mirror

Optical access hole 1775

Refocusing element

Trap chip

Outcoupling element

Waveguide

Optics chip

**Fig. 17B**

Optically transparent facet 1755

Metallized mirror

Optically transparent substrate 1785

Refocusing element

Trap chip

Outcoupling element

Waveguide

Optics chip

Europäisches Patentamt
European Patent Office
Office européen des brevets

# EUROPEAN SEARCH REPORT

**Application Number**

EP 25 15 4733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 471 809 A2 (INFINEON TECHNOLOGIES AUSTRIA AG [AT]) 4 December 2024 (2024-12-04) * paragraphs [0020], [0067], [0073]; figures 12,15F,21 * | 1-15 | INV. G04F5/14 B82Y10/00 B82Y20/00 G02B6/122 G06N10/40 |
| A | US 2023/343576 A1 (ROESSLER CLEMENS [AT] ET AL) 26 October 2023 (2023-10-26) * abstract; figure 3B * | 12 | G21K1/00 H04B10/70 |
| A | EP 4 401 091 A1 (INFINEON TECHNOLOGIES AUSTRIA AG [AT]) 17 July 2024 (2024-07-17) * abstract; figures 1-9 * | 1-15 | |

**TECHNICAL FIELDS SEARCHED (IPC)**

G04F
B82Y
H04B
H05G
G02B
G06N
G21K

The present search report has been drawn up for all claims

| Place of search | Date of completion of the search | Examiner |
|---|---|---|
| The Hague | 18 June 2025 | Mérimèche, Habib |

EPO FORM 1503 03.82 (P04C01)

## ANNEX TO THE EUROPEAN SEARCH REPORT
## ON EUROPEAN PATENT APPLICATION NO.

EP 25 15 4733

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2025

| Patent document cited in search report | | Publication date | Patent family member(s) | | Publication date |
|---|---|---|---|---|---|
| EP 4471809 | A2 | 04-12-2024 | CN | 119069337 A | 03-12-2024 |
| | | | EP | 4471806 A1 | 04-12-2024 |
| | | | EP | 4471809 A2 | 04-12-2024 |
| | | | US | 2025031584 A1 | 23-01-2025 |
| US 2023343576 | A1 | 26-10-2023 | CN | 114358298 A | 15-04-2022 |
| | | | EP | 3979299 A1 | 06-04-2022 |
| | | | US | 2022102134 A1 | 31-03-2022 |
| | | | US | 2023343576 A1 | 26-10-2023 |
| EP 4401091 | A1 | 17-07-2024 | CN | 118352218 A | 16-07-2024 |
| | | | EP | 4401091 A1 | 17-07-2024 |
| | | | US | 2024242951 A1 | 18-07-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. HÄFFNER** ; **C.F. ROOS** ; **R. BLATT**. Quantum computing with trapped ions. *Physics Reports*, 2008, vol. 469 (4), 155-203, https://doi.org/10.1016/j.phys-rep.2008.09.003

- **G. CHEN et al.** Quantum Computing Devices: Principles, Designs, and Analysis. CRC Press, 2019